(19) Europäisches Patentamt

European Patent Office

Office européen des brevets

(11) Veröffentlichungsnummer: **0 362 483**
**A1**

# (12) EUROPÄISCHE PATENTANMELDUNG

(21) Anmeldenummer: **89112059.4**

(22) Anmeldetag: **01.07.89**

(51) Int. Cl.⁵: **B01D 53/36**

(30) Priorität: **25.07.88 DE 3825206**

(43) Veröffentlichungstag der Anmeldung:
**11.04.90 Patentblatt 90/15**

(84) Benannte Vertragsstaaten:
**AT BE DE FR GB IT LU NL SE**

(71) Anmelder: **Degussa Aktiengesellschaft**
**Weissfrauenstrasse 9**
**D-6000 Frankfurt am Main 1(DE)**

(72) Erfinder: **Brand, Reinhold, Dr.**
**Gustav-Adolf-Strasse 25**
**D-6450 Hanau(DE)**
Erfinder: **Engler, Bernd, Dr.**
**Treuener Strasse 2**
**D-6450 Hanau 9(DE)**
Erfinder: **Kleine-Möllhoff, Peter**
**Freigerichter Strasse 82a**
**D-8755 Alzenau(DE)**
Erfinder: **Koberstein, Edgar, Dr.**
**Wolfskernstrasse 8**
**D-8755 Alzenau(DE)**

(54) Verfahren zur katalytischen Entstickung von Abgasen mittels eines Reduktionsmittels.

㊼ Es wird ein Verfahren zur Entfernung von in Abgasen gegebenenfalls schwankender Zusammensetzung einer Temperatur von 0 - 600° C enthaltenen Stickoxiden durch katalytische Reduktion bei einem vorgewählten stöchiometrischen Verhältnis zwischen Reduktionsmittel-und Stickoxidkonzentration vorgestellt, bei dem das Reduktionsmittel gepulst dosiert wird.

EP 0 362 483 A1

## Verfahren zur katalytischen Entstickung von Abgasen mittels eines Reduktionsmittels

Die Erfindung betrifft ein Verfahren zur Entfernung von in Abgasen gegebenenfalls schwankender Zusammensetzung einer Temperatur von 0 - 600° C enthaltenen Stickoxiden durch Behandeln der Abgase mit einem Reduktionsmittel an einem Katalysator bei einem vorgewählten stöchiometrischen Verhältnis zwischen Reduktionsmittelkonzentration und Stickoxidausgangskonzentration.

Die Stickoxide, die hauptsächlich bei Verbrennungsprozessen entstehen, zählen zu den Hauptverursachern des sauren Regens bzw. des Fotosmogs und der damit verbundenen Umweltschädigungen. Sie sollten daher durch Entfernung aus Feuerungsabgasen vor deren Abgabe an die Umgebung weitgehend beseitigt werden.

Quellen der Stickoxidemissionen sind vorwiegend der Kraftfahrzeugverkehr, stationäre Verbrennungsmotoren, Kraftwerke, Heizkraftwerke, Dampferzeuger für industrielle Zwecke und industrielle Produktionsanlagen.

Die Stickoxidminderung erfolgt in der Regel durch katalytische Reduktion. Als Reduktionsmittel wird hauptsächlich Ammoniak eingesetzt, da es auch in sauerstoffhaltiger Abgasatmosphäre weitgehend selektiv mit den Stickoxiden reagiert.

Als Reduktionsmittel können jedoch auch ammoniakhaltige oder -abspaltende Reduktionsmittel, wie z. B. Harnstoff, aber auch $H_2$, CO und Kohlenwasserstoffe verwendet werden.

Es wurde nun gefunden, daß die üblicherweise eingesetzten Katalysatoren je nach ihrer Zusammensetzung in Abhängigkeit von der Prozesstemperatur eine mehr oder weniger ausgeprägte Adsorptions- oder Speichereigenschaft für das eingesetzte Reduktionsmittel besitzen. Diese Eigenschaft kann die Reduktionswirkung des Katalysators, z. B. bei schwankenden Stickoxidgehalten im Rauchgas, beeinträchtigen. Es kann zu verminderten Stickoxidreduktionsraten oder zu unerwünschten Reduktionsmitteldurchbrüchen kommen. Des weiteren wurde gefunden, daß das adsorbierte Reduktionsmittel aktive Zentren des Katalysators blockiert und damit das Reduktionsvermögen des Katalysators vermindert.

Die Erfindung ermöglicht die Eliminierung dieser unerwünschten Effekte durch diskontinuierliche Zugabe des Reduktionsmittels.

Gegenstand der Erfindung ist ein Verfahren zur Entfernung von in Abgasen gegebenenfalls schwankender Zusammensetzung einer Temperatur von 0 - 600° C enthaltenen Stickoxiden durch Behandeln der Abgase mit einem Reduktionsmittel an einem Katalysator bei einem vorgewählten stöchiometrischen Verhältnis zwischen Reduktionsmittelkonzentration und Stickoxidausgangskonzentration, welches dadurch gekennzeichnet ist, daß man das Reduktionsmittel dem zu behandelnden Abgas diskontinuierlich in Pulsen $t_A$ von 0,1 bis 15 000, vorzugsweise 0,5 bis 300, insbesondere 1 bis 90 sec. Dauer mit dazwischenliegenden Halteintervallen $t_z$ von 0,1 bis 15 000, vorzugsweise 0,5 bis 300, insbesondere 1 bis 90 sec. Dauer zudosiert.

Die Pulsdauer $t_A$ für die Reduktionsmittelzugabe, z. B. eine Ammoniakzugabe, und die Dauer des Halteintervalls $t_z$ richten sich nach der Art des verwendeten Katalysators, der Abgastemperatur und der Abgaszusammensetzung, wobei der Einfluß der Abgastemperatur dominiert.

Es hat sich gezeigt, daß die Haltzeit $t_z$ zum Schließen des Dosierventils für die Reduktionsmittelzugabe bei höheren Temperaturen kürzer als die Öffnungszeit $t_A$ des Dosierventils bemessen werden muß, um ein Zurückgehen der Katalysatoraktivität zu vermeiden. Es kann aber auch bei ansteigender $NO_x$-Konzentration im nichtbehandelten Abgas günstig sein, die Schließzeit des Dosierventils gegenüber der Öffnungszeit etwas zu verlängern.

Im wesentlichen sieht jedoch eine vorteilhafte Ausführungsform des erfindungsgemäßen Verfahrens vor, daß man bei Abgastemperaturen von 250 - 600° C die Dosierungszeit für das Reduktionsmittel länger bemißt als das Halteintervall und bei Temperaturen unter 250° C umgekehrt verfährt.

In der Praxis hat sich eine meß- und regeltechnische Steuerung des Verfahrens als vorteilhaft erwiesen, bei der man den jeweiligen Abgasdurchfluß (a) und die jeweilige, abgasanalytisch ermittelte Stickoxidkonzentration vor und nach Katalysator (b) bzw. (c) unter Gewinnung proportionaler Signale mißt, die Signale (a), (b) und (c) einem Multiplikator, die Signale (a) und (c) einem Verhältnissteller für das Stöchiometrieverhältnis (f) und das Signal (c) einem Taktgeber für ein 0/1-Signal eingibt, dessen jeweilige, den Stickoxidschlupf beeinflussende Signaldauer in Abhängigkeit von (c) manuell oder automatisch einstellbar ist, wobei der Taktgeber den Multiplikator über den Verhältnissteller ansteuert und der Multiplikator einem Dosierventil für das Reduktionsmittel derart ein dem Produkt aus (a), (b) und (f) proportionales Signal aufgibt, daß bei Auftreten des O-Signals $t_z$ (für (f) = 0) das Ventil geschlossen und bei Auftreten des 1-Signals $t_A$ entsprechend dem vorgewählten Wert von (f) geöffnet wird.

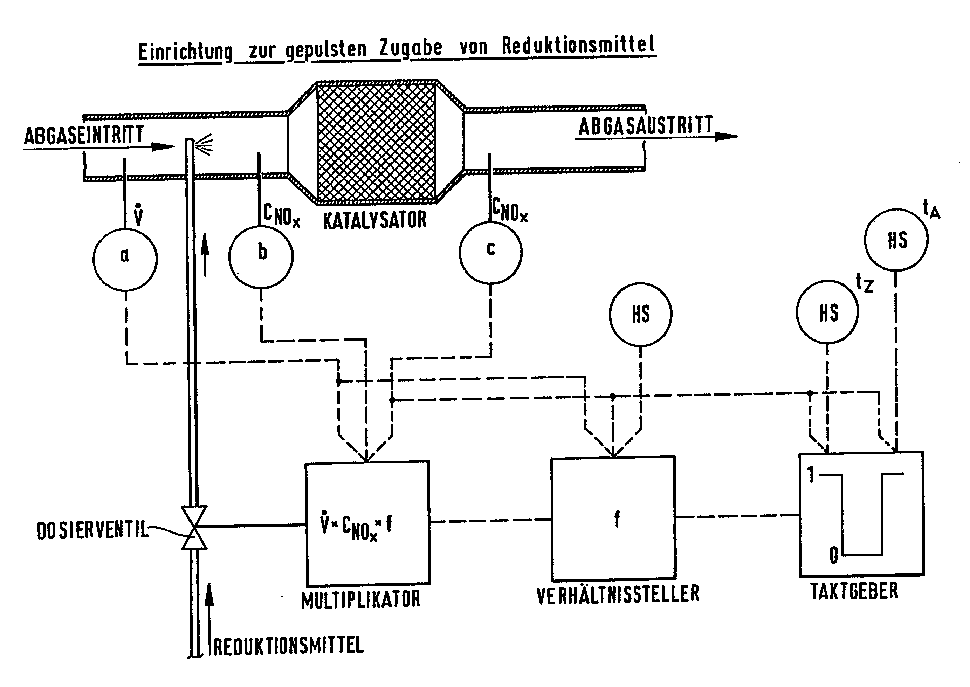

Die Erfindung wird im Folgenden anhand der Figur der Zeichnung und einer Beschreibung des meß- und regeltechnischen Aufbaus näher erläutert.

Die verwendete Schaltung besteht aus der Durchflußmessung des Abgases oder einem Signal, welches dem Durchfluß (a) proportional ist, der Stickoxidanalyse (b) und (c) vor und nach Katalysator, dem Multiplikator, dem Verhältnissteller für das Verhältnis (f), dem Taktgeber und dem Dosierventil.

Der Multiplikator liefert dem Dosierventil ein Signal, welches proportional dem Produkt aus Rauchgasdurchfluß V, Stickoxidkonzentration vor Katalysator ($C_{NOx}$) und dem Stöchiometrieverhältnis Reduktionsmittelkonzentration/Stickoxidkonzentration (f) ist. Das Stöchiometrieverhältnis wird dem Multiplikator mit Hilfe des Verhältnisstellers aufgegeben. Das Stöchiometrieverhältnis kann manuell oder automatisch über die Abgasanalysen (b) und (c) eingestellt werden. Der Verhältnissteller seinerseits wird mit dem Taktgeber angesteuert, welcher ein 0/1-Signal liefert. Bei dem 0-Signal wird das stöchiometrische Verhältnis auf 0 gestellt, so daß das Dosierventil schließt. Bei dem 1-Signal wird das stöchiometrische Verhältnis entsprechend der vorgegebenen $NO_x$-Konzentration im behandelten Abgas freigegeben und das Dosierventil entsprechend aufgefahren. Die Signaldauer der 0- und 1-Signale und damit die Öffnungs- und Schließzeiten des Dosierventils können unter Beachtung der $NO_x$-Analyse (c) von Hand vorgegeben oder über die Rauchgasanalyse (c) automatisch eingestellt werden.

Das erfindungsgemäße Verfahren wurde an einer Anlage zur selektiven katalytischen Entstickung eines Rauchgases aus einer Erdgasfeuerung mittel Ammoniak durchgeführt. Die technischen Daten sind in der Tabelle 1 aufgeführt.

Tabelle 1

| Rauchgasdurchsatz | 100 m³/h i.N.f. (im Normalzustand, feucht) |
| Katalysatorvolumen | 4 Lagen a 3,375 l |
| Rauchgastemperatur | 200° C |
| Reduktionsmittel | Ammoniak |
| Rauchgaszusammensetzung | $O_2$ 8,6 Vol.% |
| | $CO_2$ 7,5 Vol.% |
| | $H_2O$ 15,0 Vol.% |
| | $NO_x$ ca. 500 ppm |
| Stöchiometrieverhältnis (f) bei 1-Signal | 2,25 |
| Signaldauer 1-Signal ($t_A$) | 40 sec. |
| Stöchiometrieverhältnis (f) bei 0-Signal | 0 |
| Signaldauer 0-Signal ($t_Z$) | 60 sec. |
| Stickoxidumsatz | 90 % |

Ohne Benutzung der vorliegenden Erfindung, d. h. bei kontinuierlicher, dem Abgasvolumenstrom V und der Stickoxidkonzentration (b) des unbehandelten Abgases proportionaler Reduktionsmittelzugabe wurde ein stetiger Rückgang der Stickoxidkonvertierung innerhalb von 400 Stunden auf ca. 20 % beobachtet.

Bei gepulster Dosierung des Reduktionsmittels gemäß den Betriebsdaten von Tabelle 1 konnten dagegen nahezu gleichbleibende Stickoxidkonvertierungsraten während einer Beobachtungszeit von 2.000 Stunden erzielt werden (Abfall auf nur 85 % Konversion). Damit ist gezeigt, daß die Reduktion der Stickoxide am Katalysator innerhalb eines gewählten Schließintervalls praktisch unbeeinflußt weiterläuft. Da alle gebräuchlichen Stickoxidreduktionskatalysatoren die beobachtete Eigenschaft zeigen, ist das Verfahren unbeschränkt anwendbar.


**Ansprüche**

1. Verfahren zur Entfernung von in Abgasen gegebenenfalls schwankender Zusammensetzung einer Temperatur von 0 - 600° C enthaltenen Stickoxiden durch Behandeln der Abgase mit einem Reduktionsmittel an einem Katalysator bei einem vorgewählten stöchiometrischen Verhältnis zwischen Reduktionsmittelkonzentration und Stickoxidausgangskonzentration,
**dadurch gekennzeichnet,**
daß man das Reduktionsmittel dem zu behandelnden Abgas diskontinuierlich in Pulsen $t_A$ von 0, 1 bis 15 000, vorzugsweise 0,5 bis 300, insbesondere 1 bis 90 sec. Dauer mit dazwischenliegenden Halteintervallen $t_Z$ von 0,1 bis 15 000, vorzugsweise 0,5 bis 300, insbesondere 1 bis 90 sec. Dauer zudosiert.

2. Verfahren nach Anspruch 1,

**dadurch gekennzeichnet,**

daß man bei Abgastemperaturen von 250 bis 600° C die Dosierungszeit für das Reduktionsmittel länger bemißt als das Halteintervall und bei Temperaturen unter 250° C umgekehrt verfährt.

3. Verfahren nach Anspruch 1 oder 2,

**dadurch gekennzeichnet,**

daß man den jeweiligen Abgasdurchfluß (a) und die jeweilige, abgasanalytisch ermittelte Stickoxidkonzentration vor und nach Katalysator (b) bzw. (c) unter Gewinnung proportionaler Signale mißt, die Signale (a), (b) und (c) einem Multiplikator, die Signale (a) und (c) einem Verhältnissteller für das Stöchiometrieverhältnis (f) und das Signal (c) einem Taktgeber für ein 0/1-Signal eingibt, dessen jeweilige, den Stickoxidschlupf beeinflussende Signaldauer in Abhängigkeit von (c) manuell oder automatisch einstellbar ist, wobei der Taktgeber den Multiplikator über den Verhältnissteller ansteuert und der Multiplikator einem Dosierventil für das Reduktionsmittel derart ein dem Produkt aus (a), (b) und (f) proportionales Signal aufgibt, daß bei Auftreten des 0-Signals $t_Z$ (für (f) = 0) das Ventil geschlossen und bei Auftreten des 1-Signals $t_A$ entsprechend dem vorgewählten Wert von (f) geöffnet wird.

## Einrichtung zur gepulsten Zugabe von Reduktionsmittel

ABGASEINTRITT

ABGASAUSTRITT

$\dot{V}$

$c_{NO_x}$

KATALYSATOR

$c_{NO_x}$

a

b

c

HS

HS $t_Z$

HS $t_A$

DOSIERVENTIL

$\dot{V} \times c_{NO_x} \times f$

f

1

0

MULTIPLIKATOR

VERHÄLTNISSTELLER

TAKTGEBER

REDUKTIONSMITTEL

EP 0 362 483 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 210 392 (STEAG AG) * Ansprüche 1,10,12 * --- | 1 | B 01 D 53/36 |
| A | EP-A-0 232 452 (STEAG AG) * Ansprüche 1-4 * --- | 1 | |
| A | DE-A-3 337 793 (L. & C. STEINMUELLER) * Ansprüche 1-3 * ----- | 1,3 | |

| | | | RECHERCHIERTE SACHGEBIETE (Int. Cl.5) |
|---|---|---|---|
| | | | B 01 D |

Der vorliegende Recherchenbericht wurde für alle Patentansprüche erstellt

| Recherchenort | Abschlußdatum der Recherche | Prüfer |
|---|---|---|
| BERLIN | 30-11-1989 | BERTRAM H E H |